# FASCICULE DE BREVET EUROPEEN

(11) **EP 1 805 227 B1**
(45) Date de publication et mention de la délivrance du brevet: **09.07.2008**
(21) Numéro de dépôt: 05810574.3
(22) Date de dépôt: 14.10.2005
(51) Int. Cl.: C08F 8/00, C08F 14/18

(54) **POLYMERES FLUORES ET MEMBRANES PREPAREES A PARTIR DE TELS POLYMERES, NOTAMMENT POUR PILES A COMBUSTIBLE ET PROCEDE DE SYNTHESE DE TELS POLYMERES**
FLUORPOLYMERE UND DARAUS HERGESTELLTE MEMBRANEN, INSBESONDERE FÜR BRENNSTOFFZELLEN, UND VERFAHREN ZUR SYNTHESE DERARTIGER POLYMERE
FLUOROPOLYMERS AND MEMBRANES PREPARED FROM SUCH POLYMERS, IN PARTICULAR FOR FUEL CELLS AND METHOD FOR SYNTHESIZING SUCH POLYMERS

(30) Priorité: 19.10.2004 FR 0411081
(43) Date de publication de la demande: 11.07.2007
(60) Demande divisionnaire: 08103003.3
(73) Titulaire: COMMISSARIAT A L'ENERGIE ATOMIQUE, 75015 Paris (FR)
(72) Inventeur: CAPRON, Philippe, F-38200 LUZINAY (FR); AMEDURI, Bruno, F-34090 MONTPELLIER (FR); BOUTEVIN, Bernard, F-34090 MONTPELLIER (FR); SOUZY, Renaut, F-34090 Montpellier (FR)
(74) Mandataire: Vuillermoz, Bruno
(86) Numéro de dépôt international: PCT/FR2005/050857
(87) Numéro de publication internationale: WO 2006/042994

(56) Documents cités:
- WO-A-96/40798
- FR-A- 2 843 398
- SOUZY RENAUD ET AL: "Radical copolymerization of alpha-trifluoromethylacrylic acid with vinylidene fluoride and vinylidene fluoride/hexafluoropropylene" MACROMOL. CHEM. PHYS.; MACROMOLECULAR CHEMISTRY AND PHYSICS, vol. 205, no. 4, 4 mars 2004 (2004-03-04), pages 476-485,

## Description

### DOMAINE TECHNIQUE

La présente invention a trait à de nouveaux polymères fluorés et à leur procédé de préparation.

Ces polymères, qui présentent d'excellentes propriétés physico-chimiques, telles que la conductivité protonique et la stabilité chimique, trouvent en particulier leur application dans l'élaboration de membranes échangeuses d'ions, notamment destinées aux piles à combustible.

Une telle membrane constitue le coeur d'une pile à combustible. Il est succinctement rappelé qu'une telle pile à combustible est constituée de deux électrodes, anode et cathode, auxquelles sont apportés de manière continue le comburant et le combustible, et qui sont séparées par un électrolyte. La membrane assure le passage des protons, de l'anode vers la cathode. Elle est imperméable aux combustibles hydrogène, méthanol et air. Son épaisseur est comprise entre 10 et 200 µm.

### ETAT DE LA TECHNIQUE ANTERIEURE

Il existe, à ce jour différentes familles de polymères conducteurs protoniques, utilisables dans le contexte des membranes de piles à combustible.

Les polymères sulfonés à base de squelettes thermostables, tels que les polysulfones sulfonés, les polyetherethercétones sulfonés, les polystyrènes sulfonés, les polybenzimidazoles sulfonés, présentent une faible stabilité chimique et thermique. Ainsi, les piles à combustible constituées de membranes obtenues à partir de tels polymères présentent une durabilité et une température d'utilisation limitées.

A ce jour, les performances les plus intéressantes sont obtenues avec des polymères perfluorés contenant une chaîne latérale fluorée porteur d'un groupement sulfoné, par exemple le Nafion (Dupont de Nemours ; marque déposée) de formule :

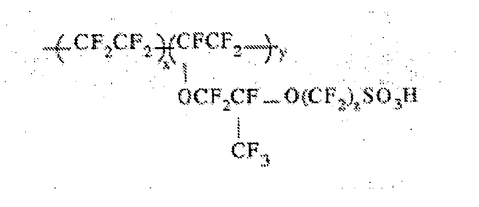

Les produits Flemion (Asahi Casei), Hyflon (Solvay) ou Dow (Dow Chemical) (marques déposées) sont des polymères fluorés similaires, qui se distinguent par la longueur de la chaîne fluorée. Ces polymères présentent d'excellentes propriétés en terme de stabilité chimique et électrochimique. En outre, ils offrent une très bonne conductivité protonique et constituent actuellement les matériaux de référence pour les piles à combustible.

Cependant, les membranes obtenues à partir de ces polymères possèdent une faible stabilité thermomécanique et thermo-hydrique, ce qui interdit le fonctionnement des piles dérivées à des températures au-delà de 80°C. En outre, le coût de ces membranes s'avère particulièrement élevé, en raison de l'onérosité de la chimie du fluor et du caractère explosif d'un des précurseurs, le VF2.

Le document FR-A-2 843 398 décrit une nouvelle structure polymère comprenant à la fois des motifs aliphatiques fluorés et des motifs aromatiques fluorés porteur d'une fonction ionique, plus particulièrement sulfonique ou phosphonique. Les membranes obtenues à partir de ces polymères ne présentent pas les inconvénients susmentionnés.

Dans ce document, les polymères sont obtenus par polymérisation classique entre les deux familles de monomères (aliphatiques et aromatiques), ou par greffage des motifs aromatiques sur les motifs aliphatiques, après attaque à l'ozone.

Or, le Demandeur a constaté qu'en mettant en oeuvre les enseignements de ce document, il obtenait des polymères présentant d'une part un faible taux d'incorporation des fonctions sulfoniques ou phosphoniques (de l'ordre de 15% en fraction molaire), et possédant d'autre part une faible masse molaire entraînant des caractéristiques mécaniques médiocres. Ces résultats s'expliqueraient par la réactivité limitée du monomère aromatique ionique par rapport à celle des monomères aliphatiques constituant le polymère d'intérêt. Par conséquent, les membranes élaborées à partir de tels polymères présentent de faibles propriétés mécaniques et une conductivité protonique de l'ordre de 10⁻⁴ S/cm, insuffisante par rapport aux spécifications demandées (de l'ordre de 10⁻² S/cm).

### EXPOSE DE L'INVENTION

La présente invention propose des structures chimiques de polymères, proches de celles décrites dans le document FR-A-2 843 398, mais dont le procédé de synthèse permet d'obtenir des taux élevés d'intégration du monomère aromatique porteur de la fonction ionique. Les membranes élaborées à partir de tels polymères présentent des qualités, en particulier en termes de propriétés mécaniques et de stabilité thermique, bien supérieures à celles décrites dans l'art antérieur, notamment dans le document précité.

Ainsi, l'invention concerne des polymères fluorés comprenant au moins un motif répétitif de formule (I) : 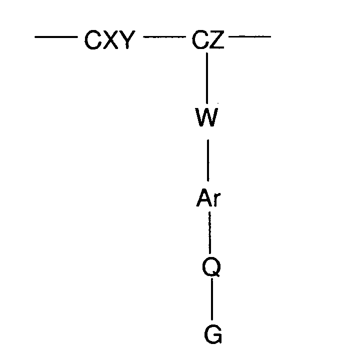 dans laquelle :
- les groupes X et Y, identiques ou différents, représentent H ou F ;
- le groupe Z représente F ou un groupe alkyle perfluoré ;
- le groupe W représente CH₂O;
- le groupe Ar représente un groupe divalent comprenant au moins un cycle aromatique carboné, éventuellement substitué ;
- le groupe Q représente une simple liaison, (CF₂)ₙ avec 1 ≤ n ≤ 10, ou C₂F₄OC₂F₄ ;
- le groupe G représente un groupe échangeur de cations, préférentiellement choisi parmi :
   - SO₂R₁, avec R₁ représentant OH, F ou Cl ; ou
   - P(=O) (OR₂)₂ avec R₂ représentant H ou un groupe alkyle éventuellement substitué ; ou
   - CO₂H.

Par le terme "répétitif", on entend que ce motif est répété n fois dans la chaîne polymérique, avec n avantageusement compris entre 10 et 1000.

Selon un premier mode de réalisation, un polymère selon l'invention peut donc être de type homopolymère.

Dans un second mode de réalisation, un polymère selon l'invention comprend en outre au moins un motif répétitif de formule (II) :

-CR₃R₄-CR₅R₆-

- dans laquelle les groupes R₃, R₄, R₅ et R₆, identiques ou différents, représentent H, Cl, I, un groupe alkyle éventuellement substitué, ou un groupe fluoré constitué par un atome de fluor ou un groupe alkyle substitué par au moins un atome de fluor, l'un au moins des groupes R₃, R₄, R₅ et R₆ représentant un groupe fluoré.

La formule chimique de ces polymères se différencie de celle présentée dans le document FR-A-2 843 398 par le fait que le groupement aromatique (Ar) est lié au groupe fluoré (CZ) par un groupe CH₂O, qui n'était pas envisagé dans les possibilités indiquées pour la nature du groupe W dans ce document. La présence du groupe CH₂O dans ce polymères, ainsi que les valeurs spécifiées pour les capacités d'échange ionique des ces polymères, sont directement liées au nouveau procédé de synthèse de ces polymères, mis au point conformément à l'invention, selon les étapes suivantes :

### 1/ Homopolymérisation d'un monomère fluoré porteur d'un groupement acide carboxylique, de type acide acrylique ou méthacrylique fluoré :

Ce monomère présente typiquement une formule (I') : 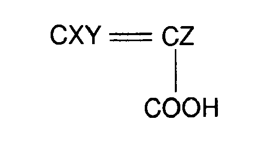 avec X,Y,Z définis comme précédemment ;
ou

### Polymérisation d'un tel monomère avec au moins un autre monomère fluoré.

Les co-monomères sont de manière générale des monomères fluorés aliphatiques de formule (II') :

CR₃R₄ = CR₅R₆

avec R₃, R₄, R₅ et R₆ définis comme précédemment.

Ils peuvent être du type choisi dans le groupe comprenant : le fluorure de vinyle (VF), le fluorure de vinylidène (VDF), le trifluoroéthylène, l'hexafluoropropène, le chlorotrifluoroéthylène (CTFE), le 1-hydropentafluoropropène, l'hexafluoroisobutylène, le 3,3,3-trifluoropropène et de façon générale, tous les composés vinyliques fluorés ou perfluorés.

Par ailleurs, des éthers perfluorovinyliques jouent aussi le rôle de co-monomères. Parmi eux, on peut citer les perfluoroalkyl vinyl éthers (PAVE), dont le groupement alkyle possède de un à trois atomes de carbone, par exemple, le perfluorométhyl vinyl éther (PMVE), le perfluoroéthyl vinyl éther (PEVE) et le perfluoropropyl vinyl éther (PPVE).

Ces monomères peuvent aussi être des perfluoroalkoxy alkyl vinyl éthers (PAAVE), tels que :
- le perfluoro-(2-n-propoxy)-propylvinyl éther,
- le perfluoro-(2-méthoxy)-propyl-vinyl éther,
- le perfluoro-(3-méthoxy)-propyl-vinyl éther,
- le perfluoro-(2-methoxy)-ethyl-vinyl éther,
- le perfluoro-(3,6,9-trioxa-5,8-dimethyl) dodeca-1-ène,
- le perfluoro-(5-méthyl-3,6-dioxo)-1-nonène.

De plus, des monomères perfluoroalkoxyalkyl vinyl éthers à extrémité carboxylique ou à extrémité fluorure de sulfonyle (tel que le perfluoro-(4-méthyl-3,6-dioxaoct-7-ène) fluorure de sulfonyle) peuvent aussi être utilisés pour la synthèse d'élastomères fluorés telle que décrite dans la présente invention.

Des mélanges de PAVE et PAAVE peuvent également être présents dans les copolymères selon l'invention.

La polymérisation peut s'effectuer en solution, en masse, en émulsion ou en microémulsion. Les solvants utilisés sont de type ClCF₂CFCl₂, C₆F₁₄, n-C₄F₁₀, perfluoro-2-butyltetrahydrofurane (FC 75), le 1,1,1,3,3-pentafluorobutane, le 1,2-dichloroéthane, l'isopropanol, le tertiobutanol, l'acétonitrile ou le butyronitrile. Les solvants préférentiellement employés sont le 1,1,1,3,3-pentafluorbutane, l'acétonitrile et le perfluorohexane, en quantités déterminées par l'homme du métier.

Les amorceurs de polymérisation utilisés sont les azoïques (tels que l'AIBN), les peroxydicarbonates de dialkyle, le peroxyde d'acétylcyclohexanesulfonyle, le péroxyde d'aryle ou d'alkyle, tels que le peroxyde de dibenzoyle, le peroxyde de dicumyle, le peroxyde de t-butyle, les perbenzoates de t-alkyle et les peroxypivalates de t-alkyle. Sont néanmoins préférés les peroxydes de dialkyle (avantageusement le peroxyde de t-butyle), les peroxydicarbonates de dialkyle, tels que les peroxiydicarbonates de diéthyle et de di-isopropyle et les peroxypivalates de t-alkyle tels que les peroxypivalates de t-butyle et de t-amyle et, plus particulièrement encore, les peroxypivalates de t-alkyle.

Les polymères obtenus peuvent donc également être de type copolymères ou terpolymères.

### 2/ Réduction de la fonction acide carboxylique sous la forme alcool afin de permettre la réaction chimique entre le polymère et le greffon aromatique, porteur de la fonction ionique.

Cette réaction s'effectue typiquement en présente de LiAIH4 dans du tétrahydrofurane à 90°C.

Cette réaction peut être totale ou partielle.

### puis greffage d'une fonction échangeur de cations de type sulfonique, phosphonique ou carboxylique, par une réaction de type Mitsonobu.

La source du greffon a une formule générale (III') :

OH-Ar-Q-G

Il peut, par exemple, être apporté par l'acide para phénol sulfonique.

Là encore, la réaction peut être totale ou partielle.

Cette réaction génère des polymères comprenant des motifs répétitifs de formule (I) comme précédemment décrit, dans lesquels le groupe W représente CH₂O.

Ainsi, la présente invention a trait à un mode de synthèse permettant de contrôler les propriétés de conduction de la membrane obtenue à l'aide des polymères selon l'invention. Dans le cas de l'homopolymérisation, ce contrôle s'exerce au niveau des réactions de réduction et/ou de greffage, ou d'estérification (étape 2). Dans le cas de la polymérisation, le taux d'incorporation du monomère acrylique peut également être contrôlé (étape 1).

En final, ce nouveau procédé permet d'obtenir des polymères fluorés présentant des taux d'incorporation d'au moins 40 à 60 %, en terme de moles de fonction ionique/ moles totales. Ainsi, la totalité ou une partie des fonctions acryliques peuvent être modifiées pour "accueillir" le groupement porteur de la fonction ionique. La CEI (Capacité d'Echange Ionique exprimée en meq/g) du polymère peut donc être ajustée.

Selon l'invention, les polymères fluorés présentent une capacité d'échange ionique supérieure ou égale à 0,5 meq/g de polymère, préférentiellement supérieure ou égale à 1 meq/g, voire 1,4 meq/g.

Ainsi, il a été possible au Demandeur de fabriquer des membranes, par le procédé de coulée évaporation, présentant une conductivité protonique de 0,01 S/cm pour une CEI de 1,4 meq/g. Le procédé de coulée évaporation, couramment utilisé dans ce domaine technique, consiste à solubiliser le polymère dans un solvant puis à déposer cette solution sur un substrat, l'épaisseur du dépôt étant contrôlée au moyen de cales. Le solvant est ensuite évaporé par chauffage si nécessaire et la membrane est décollée de son substrat.

L'invention concerne donc également les membranes obtenues à partir des polymères décrits précédemment. Elle concerne enfin les dispositifs de pile à combustible intégrant de telles membranes.

La présente invention va être illustrée à l'aide d'un exemple de réalisation présenté ci-dessous, qui n'est en aucun cas limitatif.

### EXEMPLE DE REALISATION

### A - Terpolymérisation du fluorure de vinylidène (VDF), de l'hexafluoropropène (HFP) et de l'acide trifluorométhyl acrylique (TFMAA)

La terpolymérisation du VDF, HFP et TFMAA est réalisée dans un autoclave de 160 ml, uipé d'un manomètre, d'un disque de rupture et d'une valve d'injection. Le système est préalablement purgé pendant 20 minutes sous 20 bars d'azote pour prévenir tout risque de fuite ou de dégazage.

10 g de TFMAA, 80 ml de 1,1,1,3,3-pentafluorobutane et 0,9 g d'amorceur (2,5-Bis(*tert-*butylperoxy)-2,5-diméthylhexane, tech, 90 %) sont ensuite introduits par la valve d'injection sous-vide (20mm Hg).

17 g d'HFP et 22 g de VDF sont ensuite ajoutés par double pesée.

Le mélange est chauffé à 134°C pendant 10 minutes.

Après réaction, le mélange est refroidi jusqu'à température ambiante et placé dans un bain d'eau glacée. Le produit est ensuite analysé par spectroscopie RMN¹⁹F. Le solvant est évaporé et le précipité est solubilisé dans le DMF, puis précipité dans l'eau froide. Ce dernier est filtré puis séché sur du P₂O₅ à température ambiante sous-vide (20 mm Hg) pendant 48 heures.

### B - Réduction des fonctions carboxyliques du polymère précédemment obtenu

La réduction des fonctions carboxyliques du TFMAA s'effectue avec 4 nmoles de LiAlH₄ dans un tricol surmonté d'une colonne à reflux et sous atmosphère neutre. Le polymère est dissous dans du THF anhydre et ajouté dans le tricol.

Le mélange est ensuite porté à une température de 90°C.

La réduction des fonctions carboxyliques est effective après trois heures de réaction. L'excès de LiAlH4 est neutralisé par un excès d'acide chlorhydrique (10% dans l'eau) formant ainsi un précipité solide.

Le polymère fluoré est purifié par précipitation dans le pentane à froid. Le rendement de cette réaction est de 70 %.

### C - Greffage du monomère porteur de la fonction ionique par éthérification des fonctions alcool obtenues précédemment

La réaction de Mitsonobu est utilisée pour l'éthérification des fonctions alcool du terpolymère par l'acide 4 phénol sulfonique *[*O. Mitsunobu, Synthésis, 1, 1981, 1-28*].*

Une solution contenant 12,50 g (0,048 mol) de triphénylphosphine de 10,1 g (0,058 mol) d'acide 4-phénol sulfonique (préalablement séché sur MgSO₄) et 60 ml de THF (60 ml) est ajoutée à une solution contenant 10,1 g de diisopropylazodicarboxylate (0,051 mol) et 8,1 g de terpolymères dans 100 ml de THF.

Un précipité blanc d'oxyde de triphénylphosphine et de diisopropyl-hydrazinedicarboxylate apparaît rapidement.

Après 24 heures d'agitation à température ambiante, le précipité blanc est éliminé par filtration. Le filtrat est ensuite évaporé et le résidu solubilisé dans l'acétonitrile. L'oxyde triphenylphosphine oxyde est complètement éliminé par extraction liquide/liquide dans l'hexane.

Le terpolymère est enfin précipité dans du pentane à froid et séché sur du P₂O₅ sous-vide (20 mm Hg) pendant 48 heures. Le rendement est de 60 %.

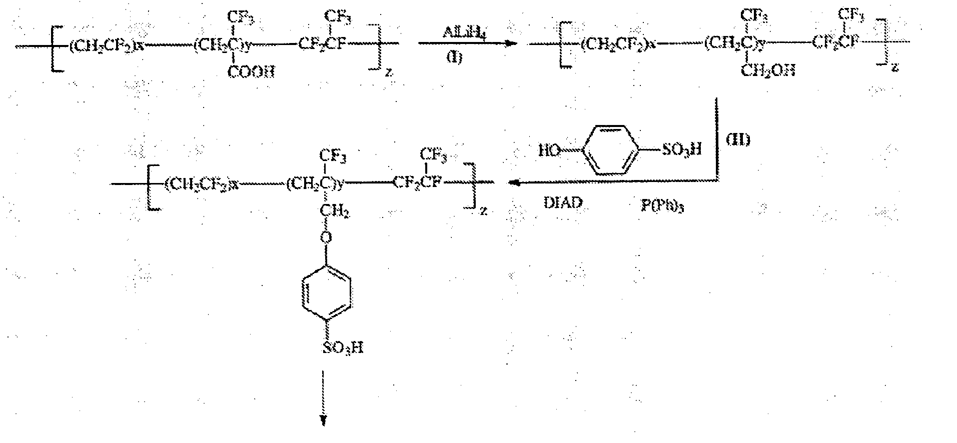

### D - Préparation de membranes échangeuses de protons à partir du polymère synthétisé

10 g de terpolymère (contenant 80 % en masse d'acide phénol sulfonique) est solubilisé dans la N-méthyl pyrolidone (100 ml) à température ambiante pendant une heure.

La membrane est ensuite formée par le procédé de coulée évaporation.

Le solvant est évaporé à 60°C pendant six heures. La membrane est ensuite acidifiée dans une solution d'H₂SO₄ 1M pendant quatre heures, puis lavée dans une solution d'eau désionisée. Cette membrane présente une conductivité de 0,01 S/cmpour une CEI de l'ordre de 1,3 meq/g polymère.

## Revendications

1. Polymère fluoré comprenant au moins un motif répétitif de formule (I) : 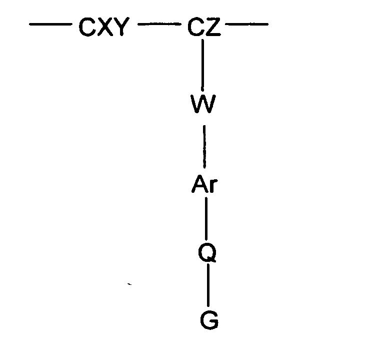 dans laquelle :
- les groupes X et Y, identiques ou différents, représentent H ou F ;
- le groupe Z représente F ou un groupe alkyle perfluoré ;
- le groupe W représente CH₂O ;
- le groupe Ar représente un groupe divalent comprenant au moins un cycle aromatique carboné éventuellement substitué ;
- le groupe Q représente une simple liaison, (CF₂)ₙ avec 1 ≤ n ≤ 10, ou C₂F₄OC₂F₄ ;
- le groupe G représente un groupe échangeur de cations, préférentiellement choisi parmi :
• SO₂R₁, avec R₁ représentant OH, F ou Cl ; ou
• P(=O) (OR₂)₂ avec R₂ représentant H ou un groupe alkyle éventuellement substitué ;ou
• CO₂H
et possédant une capacité d'échange ionique supérieure ou égale à 0,5 meq/g polymère.

2. Polymère fluoré selon la revendication 1, ***caractérisé* en ce qu'**il comprend en outre au moins un motif répétitif de formule (II) :
-CR₃R₄-CR₅R₆-
dans laquelle les groupes R₃, R₄, R₅ et R₆, identiques ou différents, représentent H, CI, I, un groupe alkyle éventuellement substitué, ou un groupe fluoré comprenant un atome de fluor ou un groupe alkyle substitué par au moins un atome de fluor, l'un au moins des groupes R₃, R₄, R₅ et R₆ représentant un groupe fluoré.

3. Polymère fluoré selon la revendication 1 ou 2, ***caractérisé* en ce qu'**il s'agit d'un copolymère ou d'un terpolymère.

4. Procédé de synthèse d'un polymère fluoré comprenant les étapes suivantes :
a) Homopolymérisation d'au moins un monomère de formule (I') : 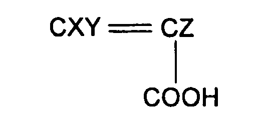 ou Polymérisation d'au moins un monomère de formule (I') : 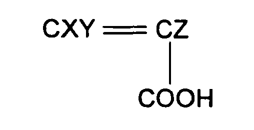 avec au moins un monomère de formule (II') :
CR₃R₄ = CR₅R₆
formules dans lesquelles :
- les groupes X et Y, identiques ou différents, représentent H ou F ;
- le groupe Z représente F ou un groupe alkyle perfluoré ;
- les groupes R₃, R₄, R₅ et R₆, identiques ou différents, représentent H, Cl, I, un groupe alkyle éventuellement substitué, ou un groupe fluoré comprenant un atome de fluor ou un groupe alkyle substitué par au moins un atome de fluor, l'un au moins des groupes R₃, R₄, R₅ et R₆ représentant un groupe fluoré.
b) Réduction de la fonction carboxylique en fonction alcool ; suivie d'un greffage, au moyen de la réaction de Mitsonubu, sur cette fonction alcool d'un monomère aromatique porteur d'une fonction ionique, de formule (III'):
OH-Ar-Q-G
dans laquelle :
- le groupe Ar représente un groupe divalent comprenant au moins un cycle aromatique carboné éventuellement substitué ;
- le groupe Q représente une simple liaison, (CF₂)ₙ avec 1 ≤ n ≤ 10, ou C₂F₄OC₂F₄ ;
- le groupe G représente un groupe échangeur de cations, préférentiellement choisi parmi :
• SO₂R₁, avec R₁ représentant OH, F ou Cl ; ou
• P(=O) (OR₂)₂ avec R₂ représentant H ou un groupe alkyle éventuellement substitué ;ou
• CO₂H

5. Procédé de synthèse d'un polymère fluoré selon la revendication 4, ***caractérisé* en ce que** le monomère de formule (I') est de l'acide acrylique ou méthacrylique fluoré, préférentiellement de l'acide trifluorométhylacrylique (TFMAA).

6. Procédé de synthèse d'un polymère fluoré selon la revendication 4 ou 5, ***caractérisé* en ce que** le monomère de formule (II') est du fluorure de vinylidène (VDF) et/ou de l'hexafluoropropène (HFP).

7. Procédé de synthèse d'un polymère fluoré selon l'une des revendications 4 à 6, ***caractérisé* en ce que** l'étape a) se déroule en présence d'un amorceur de polymérisation.

8. Procédé de synthèse d'un polymère fluoré selon l'une des revendications 4 à 7, ***caractérisé* en ce que** la réduction de la fonction carboxylique en fonction alcool dans l'étape b) se déroule à 90°C, en présence d'un solvant constitué de tétrahydrofurane et du catalyseur LiAlH₄.

9. Procédé de synthèse d'un polymère fluoré selon l'une des revendications 4 à 8, ***caractérisé* en ce que** le monomère de formule (III') est constitué par de l'acide para phénol sulfonique.

10. Membrane comprenant au moins un polymère selon l'une des revendications 1 à 3.

11. Dispositif de pile à combustible comprenant au moins une membrane selon la revendication 10.

## Claims

1. Fluoropolymer comprising at least one repeat unit of formula (I): 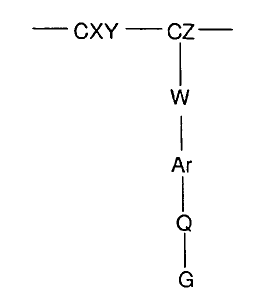 wherein:
- groups X and Y, identical or different, represent H or F;
- group Z represents F or a perfluorinated alkyl group;
- group W represents CH₂O ;
- group Ar represents a divalent group including at least one optionally substituted carbon-containing aromatic cycle;
- group Q represents a single bond, (CF₂)ₙ with 1 ≤ n ≤ 10, or C₂F₄OC₂F₄;
- group G represents a cation exchanging group, preferably selected among:
• SO₂R₁, with R₁ representing OH, F or Cl; or
• P(=O) (OR₂)₂ with R₂ representing H or an optionally substituted alkyl group; or
• CO₂H
and having ion exchange capacity not less than 0.5 meq/g polymer.

2. Fluoropolymer as claimed in claim 1, ***characterised* in that** it also comprises at least one repeat unit of formula (II):
-CR₃R₄-CR₅R₆-
wherein groups R₃, R₄, R₅ and R₆, identical or different, represent H, Cl, I, an optionally substituted alkyl group, or a fluorinated group containing a fluorine atom or an alkyl group substituted by at least one fluorine atom, at least one of groups R₃, R₄, R₅ and R₆ representing a fluorinated group.

3. Fluoropolymer as claimed in claim 1 or 2, ***characterised* in that** it is a copolymer or a terpolymer.

4. Method for synthesizing a fluoropolymer including the following steps:
a) Homopolymerisation of at least one monomer of formula (I'): 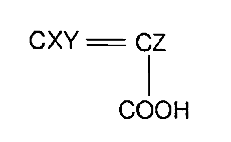 or Polymerisation of at least one monomer of formula (I'): 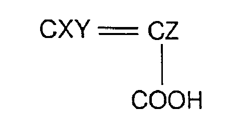 with at least one monomer of formula (II'):
CR₃R₄ = CR₅R₆
formulas in which:
- groups X and Y, identical or different, represent H or F;
- group Z represents F or a perfluorinated alkyl group;
- groups R₃, R₄, R₅ et R₆, identical or different, represent H, Cl, I, an optionally substituted alkyl group, or a fluorinated group containing a fluorine atom or an alkyl group substituted by at least one fluorine atom, at least one of groups R₃, R₄, R₅ and R₆ representing a fluorinated group.
b) Reduction of the carboxylic function into an alcohol function, followed by grafting, using the Mitsunobu reaction, onto this alcohol function, of an aromatic monomer with an ionic function, of formula (III'):
OH-Ar-Q-G
wherein:
- group Ar represents a divalent group comprising at least one optionally substituted carbon-containing aromatic cycle;
- group Q represents a single bond, (CF₂)ₙ with 1 ≤ n ≤ 10, or C₂F₄OC₂F₄;
- group G represents a cation exchanging group, preferably selected among:
• SO₂R₁, with R₁ representing OH, F or Cl; or
• P(=O) (OR₂)₂ with R₂ representing H or an optionally substituted alkyl group; or
• CO₂H.

5. Method for synthesizing a fluoropolymer as claimed in claim 4, ***characterised* in that** the monomer of formula (I') is fluorinated acrylic or methacrylic acid, preferably trifluoromethylacrylic acid (TFMAA).

6. Method for synthesizing a fluoropolymer as claimed in claim 4 or 5, ***characterised* in that** the monomer of formula (II') is vinylidene fluoride (VDF) and/or hexafluoropropene (HFP).

7. Method for synthesizing a fluoropolymer as claimed in any of claims 4 to 6, ***characterised* in that** step a) is carried out in the presence of a polymerisation initiator.

8. Method for synthesizing a fluoropolymer as claimed in any of claims 4 to 7, ***characterised* in that** the reduction of the carboxylic function into an alcohol function in step b) is carried out at 90°C, in the presence of a solvent composed of tetrahydrofuran and the LiAlH₄ catalyst.

9. Method for synthesizing a fluoropolymer as claimed in any of claims 4 to 8, ***characterised* in that** the monomer of formula (III') is composed of para phenol sulphonic acid.

10. Membrane containing at least one polymer as claimed in any of claims 1 to 3.

11. Fuel cell system containing at least one membrane as claimed in claim 10.

## Patentansprüche

1. Fluorpolymer, das mindestens eine repetitive Einheit der Formel (I) umfasst: 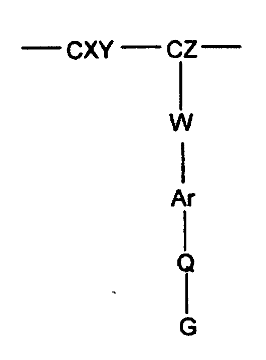 in der:
- die Gruppen X und Y, die gleich oder verschieden sind, H oder F darstellen;
- die Gruppe Z F oder eine perfluorierte Alkylgruppe darstellt;
- die Gruppe W CH₂O darstellt;
- die Gruppe Ar eine zweiwertige Gruppe darstellt, die mindestens einen gegebenenfalls substituierten aromatischen Kohlenstoffring umfasst;
- die Gruppe Q eine Einfachbindung, (CF₂)ₙ mit 1 ≤ n ≤ 10 oder C₂F₄OC₂F₄ darstellt;
- die Gruppe G eine Kationenaustauschgruppe darstellt, die vorzugsweise ausgewählt ist aus:
• SO₂R₁, wobei R₁ OH, F oder Cl darstellt; oder
• P(=O)(OR₂)₂, wobei R₂ H oder eine gegebenenfalls substituierte Alkylgruppe darstellt; oder
• CO₂H
und das ein Ionenaustauschkapazität besitzt, die höher als oder gleich 0,5 mVal/g Polymer ist.

2. Fluorpolymer nach Anspruch 1, **dadurch gekennzeichnet, dass** es außerdem mindestens eine repetitive Einheit der Formel (II) umfasst:
-CR₃R₄-CR₅R₆-
in der die Gruppen R₃, R₄, R₅ und R₆, die gleich oder verschieden sind, H, Cl, I, eine gegebenenfalls substituierte Alkylgruppe oder eine Fluorgruppe darstellen, die ein Fluoratom oder eine mit mindestens einem Fluoratom substituierte Alkylgruppe umfasst, wobei mindestens eine der Gruppen R₃, R₄, R₅ und R₆ eine Fluorgruppe darstellt.

3. Fluorpolymer nach Anspruch 1 oder 2, **dadurch gekennzeichnet, dass** es sich um ein Copolymer oder ein Terpolymer handelt.

4. Verfahren zur Synthese eines fluorierten Polymers, umfassend die folgenden Schritte:
a) Homopolymerisation mindestens eines Monomers der Formel (I'): 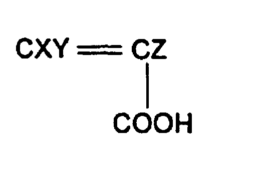 oder Polymerisation mindestens eines Monomers der Formel (I'): 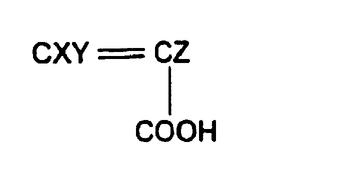 mit mindestens einem Monomer der Formel (II'):
CR₃R₄ = CR₅R₆
wobei in diesen Formeln:
- die Gruppen X und Y, die gleich oder verschieden sind, H oder F darstellen;
- die Gruppe Z F oder eine Perfluoralkylgruppe darstellt;
- die Gruppen R₃, R₄, R₅ und R₆, die gleich oder verschieden sind, H, Cl, I, eine gegebenenfalls substituierte Alkylgruppe oder eine Fluorgruppe darstellen, die ein Fluoratom oder eine mit mindestens einem Fluoratom substituierte Alkylgruppe umfasst, wobei mindestens eine der Gruppen R₃, R₄, R₅ und R₆ eine Fluorgruppe darstellt,
b) Reduktion der Carboxylgruppe zur Alkoholgruppe; und darauffolgende Zweigpolymerisation, mittels der Mitsunobu-Reaktion, eines aromatischen Monpmers, welches eine Ionengruppe hängt, auf diese Alkoholgruppe.
OH-Ar-Q-G
in der:
- die Gruppe Ar eine zweiwertige Gruppe darstellt, die mindestens einen gegebenenfalls substitierten aromatischen Kohlenstoffring umfasst;
- die Gruppe Q eine Einfachbindung, (CF₂)ₙ mit 1 ≤ n ≤ 10 oder C₂F₄OC₂F₄ darstellt;
- die Gruppe G eine Kationenaustauschgruppe darstellt, die vorzugsweise ausgewählt ist aus:
• SO₂R₁, wobei R₁ OH, F oder Cl darstellt; oder
• P(=O) (OR₂)₂, wobei R₂ H oder eine gegebenenfalls substituierte Alkylgruppe darstellt; oder
• CO₂H

5. Verfahren zur Synthese eines Fluorpolymers nach Anspruch 4, **dadurch gekennzeichnet, dass** das Monomer der Formel (I') Fluoracryl- oder Flourmetacrylsäure, vorzugsweise Trifluormethylacrylsäure (TFMAA) ist.

6. Verfahren zur Synthese eines Fluorpolymers nach Anspruch 4 oder 5, **dadurch gekennzeichnet, dass** das Monomer der Formel (II') Vinylidenfluorid (VDF) und/oder Hexafluorpropen (HFP) ist.

7. Verfahren zur Synthese eines Fluorpolymers nach einem der Ansprüche 4 bis 6, **dadurch gekennzeichnet, dass** der Schritt a) in Gegenwart eines Polymerisationsinitiators abläuft.

8. Verfahren zur Synthese eines Fluorpolymers nach einem der Ansprüche 4 bis 7, **dadurch gekennzeichnet, dass** die Reduktion der Carboxylgruppe zur Alkoholgruppe im Schritt b) bei 90°C in Gegenwart eines Lösungsmittels, das aus Tetrahydrofuran besteht, und des Katalysators LiAlH₄ abläuft.

9. Verfahren zur Synthese eines Fluorpolymers nach einem der Ansprüche 4 bis 8, **dadurch gekennzeichnet, dass** das Monomer der Formel (III') aus Paraphenolsulfonsäure besteht.

10. Membran, umfassend mindestens ein Polymer nach einem der Ansprüche 1 bis 3.

11. Brennstoffzellen-Vorrichtung, umfassend mindestens eine Membran nach Anspruch 10.
